# EUROPEAN PATENT SPECIFICATION

(11) **EP 2 605 175 B1**
(45) Date of publication and mention of the grant of the patent: **06.04.2016**
(21) Application number: 12197124.6
(22) Date of filing: 14.12.2012
(51) Int. Cl.: G06F 21/57, G06F 21/73

(54) **Method and apparatus for checking field replaceable unit and communication device**
Verfahren und Vorrichtung zum Prüfen einer Feldauswechslungseinheit und Kommunikationsvorrichtung
Procédé et appareil pour le contrôle d'une unité remplaçable et dispositif de communication

(30) Priority: 16.12.2011 CN 201110424365
(43) Date of publication of application: 19.06.2013
(73) Proprietor: Huawei Technologies Co., Ltd., Longgang District Shenzhen, Guangdong 518129 (CN)
(72) Inventor: Wu, Tao, 518129 Shenzhen (CN); Wei, Jianxiong, 518129 Shenzhen (CN); Deng, Zhonghua, 518129 Shenzhen (CN)
(74) Representative: Thun, Clemens

(56) References cited:
- EP-A2- 0 707 270
- FR-A1- 2 918 829
- US-A1- 2003 236 998
- US-A1- 2009 140 435
- US-B1- 7 535 249
- YIER JIN ET AL: "Hardware Trojan detection using path delay fingerprint", HARDWARE-ORIENTED SECURITY AND TRUST, 2008. HOST 2008. IEEE INTERNATIONAL WORKSHOP ON, IEEE, PISCATAWAY, NJ, USA, 9 June 2008 (2008-06-09), pages 51-57, XP031283310, ISBN: 978-1-4244-2401-6
- YIER JIN ET AL: "Hardware Trojan detection using path delay fingerprint", HARDWARE-ORIENTED SECURITY AND TRUST, 2008. HOST 2008. IEEE INTERNATIONAL WORKSHOP ON, IEEE, PISCATAWAY, NJ, USA, 9 June 2008 (2008-06-09), pages 51-57, XP031283310, ISBN: 978-1-4244-2401-6
- J Rajendran ET AL: "Securing FPGA design using PUF-chain and exploitation of other trojan detection circuits", , 1 January 2009 (2009-01-01), XP055139997, Retrieved from the Internet: URL:https://isis.poly.edu/esc/2009/Reports /Polytechnic_JV.pdf [retrieved on 2014-09-12]

## Description

### FIELD OF THE INVENTION

The present invention relates to the field of communications technologies, and in particular, to a method and an apparatus for checking a field replaceable unit, and a communication device.

### BACKGROUND OF THE INVENTION

The concept of a field replaceable unit (Field replaceable unit; hereinafter briefly referred to as: FRU) is initially proposed from the perspective of technical services. When a device is faulty in running due to hardware damage, only a corresponding faulty field replaceable unit needs to be replaced. In this way, it is avoided that the whole device is returned to the manufacturer for repair, repair efficiency is also improved, and the repair cost is reduced.

For example, hardware related to the field replaceable unit may be classified into two types. One is a communication device, including a stored program control telephone switching system, a data communication device, a wireless communication device, an optical transmission device and so on, and the other is a server type device, including a minicomputer, a server and a computer.

For the communication device, from the whole device to a power module, a replaceable optical component on a board, and so on, are all field replaceable units. For the minicomputer, the server or a computer terminal and so on, a typical field replaceable unit includes a board card, a power supply, a chassis component, and so on.

In the field of security, trustworthiness is a requirement for anti-spoofing, non-repudiation, anti-modification and/or anti-leakage. For the field replaceable unit, trustworthiness refers to end-to-end security of the field replaceable unit in an installation process, a supply chain process, and a return and repair process, and it is ensured that no illegal hardware or software is installed in the field replaceable unit in links of delivery, transportation, installation, return and repair, and so on.

There are mainly two solutions for checking the trustworthiness of the FRU in the prior art, one is replacement management based on an electronic label, and the other is a trustworthiness solution that is applied to a computer system and is based on a trusted platform module (Trusted Platform Module; hereinafter briefly referred to as: TPM) chip.

The replacement management based on the electronic label is to store information, such as the type of the FRU, into a non-volatile (Non volatile) memory component of the FRU, where the stored information may be written, read and modified, and operations such as network installation, upgrade and capacity expansion, client problem handling, spare part management batch replacement and so on may be performed by using the electronic label, which achieves effects of improving efficiency and optimizing informatization. The non-volatile memory component usually refers to a memory component which has no loss after power-off, for example, a flash memory (Flash Memory), an erasable programmable read-only memory (Erasable Programmable Read-Only Memory, EPROM), an electrically erasable programmable read-only memory (Electrically Erasable Programmable Read-Only Memory), a hard disk, and so on.

According to the solution, the hardware is easy to be stealthily substituted and an identifier is easy to be forged in a logistics process or in an FRU running status. However, the trustworthiness of the FRU cannot be detected in the replacement management based on the electronic label.

The trustworthiness solution based on the TPM chip is mainly used in the computer system at present. The TPM chip is actually a small system-on-chip including a password computing component and a memory component, and may assist the computer system to complete operations such as random number generating, key, encryption and/or authentication and so on. These operations are completed inside the TPM chip and authentication is needed for these operations, thereby having higher security.

However, in the trustworthiness solution based on the TPM chip, hardware of a small system needs to be added, and corresponding software needs to be developed. Implementation is complex, the cost is high, and the existing solution is largely changed, which is not good for smooth upgrade of a product.

FR 2 918 829 A1 discloses a process for authenticating an electronic card in order to guarantee the source of the electronic card. In FR 2 918 829 A1, a nonmodifiable identifier is encrypted and then is stored in a memory of a electronic card. When the electronic card is inserted into a rack, the encrypted identifier is read from the memory and then is decrypted. Meanwhile, the nonmodifiable identifier of the electronic card is read. Then, the decrypted identifier is compared with the read nonmodifiable identifier to authenticate the electronic card.

US 2003/236998 A1 discloses an authentication method. During authentication, system contoller 20 in system 10 accesses FRU 300 to obtain the identifier of FRU 300 and then compare the obtained identifier of FRU 300 to data stored in a qualification table 100 maintained for system 10.

YIER JIN ET AL: "Hardware Trojan detection using path delay fingerprint", HARDWARE-ORIENTED SECURITY AND TRUST, 2008. HOST 2008. IEEE INTERNATIONAL WORKSHOP ON, IEEE, PISCATAWAY, NJ, USA, 9 June 2008 (2008-06-09), pages 51-57, XP031283310, ISBN: 978-1-4244-2401-6, discloses a basic procedure of Trojan detection method. The whole testing procedure includes a step "Path delay gathering of nominal chips". In this step, many chips are selected from an IC design. High coverage input patterns are then run in these sample chips and high-dimension path delay information is collected. After that, these chips are checked under reverse-engineering to ensure they are genuine circuits.

### SUMMARY OF THE INVENTION

The present invention provides a method and an apparatus for checking a field replaceable unit, and a communication device, so as to implement trustworthiness checking of the field replaceable unit.

In one aspect, the present invention provides a method for checking a field replaceable unit, including:
obtaining first key identifier information saved in a security memory module; and
determining trustworthiness of the field replaceable unit according to the first key identifier information saved in the security memory module and second key identifier information directly obtained from the field replaceable unit;
where the determining the trustworthiness of the field replaceable unit according to the first key identifier information saved in the security memory module and the second key identifier information obtained from the field replaceable unit comprises:
   comparing the first key identifier information saved in the security memory module with the second key identifier information obtained from the field replaceable unit;
   if the first key identifier information saved in the security memory module is consistent with the second key identifier information obtained from the field replaceable unit, determining that the field replaceable unit is trustworthy; and
   if the first key identifier information saved in the security memory module is inconsistent with the second key identifier information obtained from the field replaceable unit, determining that the field replaceable unit is untrustworthy;
   wherein the first key identifier information saved in the security memory module comprises an encrypted digest, the digest being a digest of an identifier and topology of a key chip in the field replaceable unit, wherein the topology of the key chip is a connection information of a Joint Test Action Group, JTAG, scan chain.

In another aspect, the present invention provides an apparatus for checking a field replaceable unit, including:
an obtaining module, configured to obtain first key identifier information saved in a security memory module; and a determining module, configured to determine trustworthiness of the field replaceable unit according to the first key identifier information that is saved in the security memory module and obtained by the obtaining module and second key identifier information obtained from the field replaceable unit;
where the determining module comprises:
   a comparing submodule, configured to compare the first key identifier information saved in the security memory module with the second key identifier information obtained from the field replaceable unit; and
   a trustworthiness determining submodule, configured to, when the comparing submodule determines that the first key identifier information saved in the security memory module is consistent with the second key identifier information obtained from the field replaceable unit, determine that the field replaceable unit is trustworthy, and when the comparing submodule determines that the first key identifier information saved in the security memory module is inconsistent with the second key identifier information obtained from the field replaceable unit, determine that the field replaceable unit is untrustworthy;
   wherein the first key identifier information saved in the security memory module comprises an encrypted digest, the digest being a digest of an identifier and topology of a key chip in the field replaceable unit, wherein the topology of the key chip is a connection information of a Joint Test Action Group, JTAG, scan chain.

In still another aspect, the present invention provides a communication device, including: at least one field replaceable unit and at least one apparatus as described in the foregoing for checking the field replaceable unit.

According to the embodiments of the present invention, after the key identifier information saved in the security memory module is obtained, the trustworthiness of the field replaceable unit may be determined according to the key identifier information saved in the security memory module and the key identifier information directly obtained from the field replaceable unit, thereby implementing trustworthiness checking of the field replaceable unit, the implementation is simple, and the cost is low.

### BRIEF DESCRIPTION OF THE DRAWINGS

To illustrate the technical solutions according to the embodiments of the present invention or in the prior art more clearly, accompanying drawings for describing the embodiments or the prior art are introduced briefly in the following. Obviously, the accompanying drawings in the following description are merely some embodiments of the present invention, and persons of ordinary skill in the art may obtain other drawings from the accompanying drawings without making creative efforts.
FIG. 1 is a flow chart of an embodiment of a method for checking a field replaceable unit according to the present invention;
FIG. 2 is a schematic structural diagram of an embodiment of an apparatus for checking a field replaceable unit according to the present invention; and
FIG. 3 is a schematic structural diagram of another embodiment of an apparatus for checking a field replaceable unit according to the present invention.

### DETAILED DESCRIPTION OF THE EMBODIMENTS

To make the objectives, technical solutions, and advantages of the embodiments of the present invention clearer, the following describes the technical solutions in the embodiments of the present invention in detail with reference to the accompanying drawings in the embodiments of the present invention. Obviously, the embodiments in the following description are merely part of rather than all of the embodiments of the present invention. All other embodiments obtained by persons of ordinary skill in the art based on the embodiments of the present invention without making creative efforts shall fall within the protection scope of the present invention.

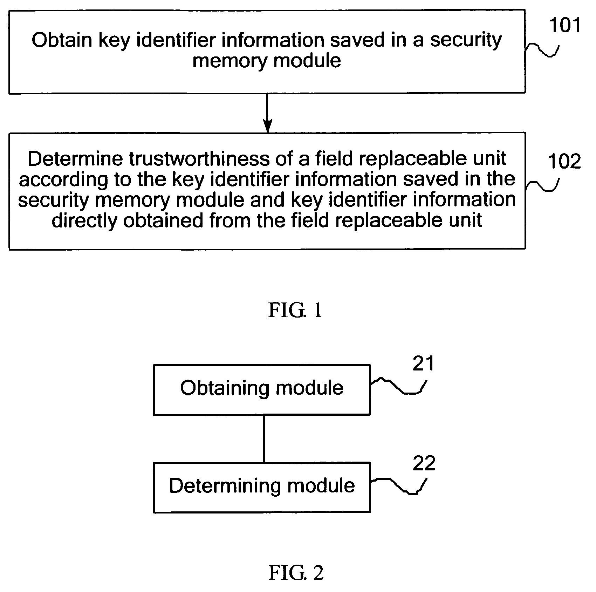

FIG 1 is a flow chart of an embodiment of a method for checking a field replaceable unit according to the present invention, and as shown in FIG. 1, the method for checking the field replaceable unit may include:
101: Obtain key identifier information saved in a security memory module.

The security memory module may be a module in the field replaceable unit, and generally speaking, may be hardware, that is, a certain non-volatile memory component or a part of a certain non-volatile memory component.

102: Determine trustworthiness of the field replaceable unit according to the key identifier information saved in the security memory module and key identifier information directly obtained from the field replaceable unit.

Specifically, the determining the trustworthiness of the field replaceable unit according to the key identifier information saved in the security memory module and the key identifier information directly obtained from the field replaceable unit may be:
comparing the key identifier information saved in the security memory module with the key identifier information directly obtained from the field replaceable unit; if the key identifier information saved in the security memory module is consistent with the key identifier information directly obtained from the field replaceable unit, determining that the field replaceable unit is trustworthy; and if the key identifier information saved in the security memory module is inconsistent with the key identifier information directly obtained from the field replaceable unit, determining that the field replaceable unit is untrustworthy.

In this embodiment, if the key identifier information saved in the security memory module includes: encrypted key identifier information, the comparing the key identifier information saved in the security memory module with the key identifier information directly obtained from the field replaceable unit may be: decrypting the encrypted key identifier information saved in the security memory module, and comparing the decrypted key identifier information with the key identifier information directly obtained from the field replaceable unit; or, encrypting the key identifier information directly obtained from the field replaceable unit, and comparing the key identifier information, which is directly obtained from the field replaceable unit and is encrypted, with the encrypted key identifier information saved in the security memory module, where an encryption algorithm adopted to encrypt the key identifier information directly obtained from the field replaceable unit is the same as an encryption algorithm adopted in the encrypted key identifier information saved in the security memory module.

The encrypted key identifier information saved in the security memory module may include one or any combination of the following: a ciphertext of an electronic identifier used to uniquely identify the field replaceable unit, a digest ciphertext of an identifier and topology of a key chip in the field replaceable unit, a digest ciphertext of a read only memory (Read Only Memory; hereinafter briefly referred to as: ROM) program area in the field replaceable unit, and a digest ciphertext of a system software program area or another software program area except the system software program area in the field replaceable unit.

Specifically, the decrypting the encrypted key identifier information saved in the security memory module, and comparing the decrypted key identifier information with the key identifier information directly obtained from the field replaceable unit may be:
decrypting the ciphertext of the electronic identifier used to uniquely identify the field replaceable unit and saved in the security memory module, and comparing the decrypted electronic identifier with an electronic identifier directly read from the field replaceable unit; and/or
decrypting the digest ciphertext of the identifier and the topology of the key chip in the field replaceable unit, where the digest ciphertext is saved in the security memory module, generating a digest of an identifier and topology of the key chip in the field replaceable unit according to the identifier and the topology of the key chip in the field replaceable unit, where the identifier and the topology are directly read from the field replaceable unit, and comparing the decrypted digest of the identifier and the topology of the key chip in the field replaceable unit with the generated digest of the identifier and the topology of the key chip in the field replaceable unit; and/or
decrypting the digest ciphertext of the ROM program area in the field replaceable unit, where the ciphertext is saved in the security memory module, generating a digest of a ROM program area in the field replaceable unit according to information of the ROM program area in the field replaceable unit, where the information of the ROM program area is directly read from the field replaceable unit; and comparing the decrypted digest of the ROM program area in the field replaceable unit with the generated digest of the ROM program area in the field replaceable unit; and/or,
decrypting the digest ciphertext of the system software program area or another software program area except the system software program area in the field replaceable unit, where the digest ciphertext is saved in the security memory module, generating a digest of a system software program area or another software program area except the system software program area in the field replaceable unit according to information of the system software program area or another software program area except the system software program area in the field replaceable unit, where the information is directly read from the field replaceable unit, and comparing the decrypted digest of the system software program area or another software program area except the system software program area in the field replaceable unit with the generated digest of the system software program area or another software program area except the system software program area in the field replaceable unit.

Optionally, after 102, the trustworthiness of the field replaceable unit may be stored in a system status memory module. The system status memory module is generally placed on a main control board or a trustworthiness management module of a network management system. Implementation of the system status memory module is not limited in the embodiment of the present invention, status information may be stored in a random access memory (Random Access Memory; hereinafter briefly referred to as: RAM), and some information may need to be stored in a non-volatile memory. Definitely, the system status memory module may also be implemented by adopting software.

Specifically, in this embodiment, the obtaining the key identifier information saved in the security memory module in 101 may be:
after the field replaceable unit is received, and before the field replaceable unit is used for the first time, obtaining the key identifier information saved in the security memory module of the field replaceable unit; or
in a start process of the field replaceable unit, obtaining the key identifier information saved in the security memory module of the field replaceable unit; or
after a field replaceable unit is newly inserted, obtaining key identifier information saved in a security memory module of the newly inserted field replaceable unit; or
in a running process of the field replaceable unit, regularly or periodically obtaining the key identifier information saved in the security memory module of the field replaceable unit; or
in a running process of the field replaceable unit, receiving the key identifier information that is saved in the security memory module of the field replaceable unit and is reported by the field replaceable unit after the field replaceable unit is triggered by a command.

In this embodiment, in the start process of the field replaceable unit, if it is determined that the field replaceable unit is trustworthy, the field replaceable unit is allowed to be registered, the electronic identifier used to uniquely identify the field replaceable unit is saved in the system status memory module, and after the field replaceable unit is successfully registered, a status of the field replaceable unit in the system status memory module is updated to an online status; while if it is determined that the field replaceable unit is untrustworthy, an alarm is generated, and an event that the field replaceable unit is untrustworthy is recorded in a log.

After the field replaceable unit is newly inserted, if it is determined that the newly inserted field replaceable unit is trustworthy, the newly inserted field replaceable unit is allowed to be registered, an identifier of the field replaceable unit corresponding to a slot number of the newly inserted field replaceable unit in the system status memory module is updated to an electronic identifier used to uniquely identify the newly inserted field replaceable unit, and after the newly inserted field replaceable unit is successfully registered, a status of the newly inserted field replaceable unit in the system status memory module is updated to an online status.

After the field replaceable unit is newly inserted, if it is determined that the newly inserted field replaceable unit is untrustworthy, an alarm is generated, and an event that the newly inserted field replaceable unit is untrustworthy is recorded in a log.

In the running process of the field replaceable unit, if it is determined that the field replaceable unit is untrustworthy, the field replaceable unit is brought offline, a status of the field replaceable unit in the system status memory module is updated to an offline status, alarm information is output, and an event that the field replaceable unit is untrustworthy is recorded in a log.

In the foregoing embodiment, after the key identifier information saved in the security memory module of the field replaceable unit is obtained, the trustworthiness of the field replaceable unit may be determined according to the key identifier information saved in the security memory module and the key identifier information directly obtained from the field replaceable unit, thereby implementing trustworthiness checking of the field replaceable unit, the implementation is simple, and the cost is low.

The method provided in the embodiment of the present invention may support the trustworthiness checking on receiving of the field replaceable unit, that is, after the field replaceable unit is delivered or returned after repair, a consignee checks the trustworthiness of the hardware and software of the received field replaceable unit.

The method provided in the embodiment of the present invention may further support start security of the field replaceable unit, that is, after the field replaceable unit is inserted into a system, according to the method provided in the embodiment of the present invention, necessary information of the field replaceable unit may be recorded, and the trustworthiness checking may be performed on the field replaceable unit; only the trustworthy field replaceable unit may be accepted and used by the system.

According to the method provided in the embodiment of the present invention, trustworthiness checking may also be performed on the field replaceable unit in the running process of the field replaceable unit, that is, in a running status, the trustworthiness checking of the field replaceable unit may be initiated actively, regularly or periodically, thereby ensuring the trustworthiness of the field replaceable unit in real time.

According to the embodiment of the present invention, a non-volatile memory module with a limited write authority, which is referred to as a security memory module (Security Memory; hereinafter briefly referred to as: Security MEM) here, is newly added in the field replaceable unit (FRU). In the embodiment of the present invention, strict identity authentication or a specific tool is needed in order to perform a write operation to the Security MEM, and an event that the write operation is performed on the Security MEM and the identity authentication information need to be recorded in a security log. The identity authentication may be that only a user with specific authority can write in the Security MEM. The specific tool may be a special interface reserved in the hardware, for example, an asynchronous transfer standard interface-RS232 interface specified by the Electronic Industries Association (Electronic Industries Association; hereinafter briefly referred to as: EIA), a Joint Test Action Group (Joint Test Action Group; hereinafter briefly referred to as: JTAG) interface or a self-defined interface, and these special interfaces can only be written by using special interface tools.

In an illustrative example, the Security MEM, built in the FRU, is configured to store the encrypted key identifier information of the FRU, and may be divided into multiple independent memory areas. The encrypted key identifier information may at least include one or any combination of the following information.
1) The ciphertext of the electronic identifier used to uniquely identify the FRU. For example, an encrypted ciphertext of the electronic label.
2) The digest ciphertext of the identifier and the topology of the key chip in the FRU. The identifier of the key chip may be an identifier (chip ID), a version or a chip type built in the key chip, and the topology of the key chip may be connection information of a Joint Test Action Group (Joint Test Action Group; hereinafter briefly referred to as: JTAG) scan chain. All the foregoing information may be recorded, or a digest may be obtained by using a one-way function.
3) The digest ciphertext of the ROM program area (the part that is unchanged during normal running) in the FRU.
4) The digest ciphertext of the system software program area or another software program area except the system software program area in the FRU.

The encrypted key identifier information saved in the Security MEM is encrypted in a manner agreed by both parties (the consigner and the consignee). If an asymmetric encryption manner is adopted, a public key may be saved in the system status memory module (System Status Memory; hereinafter briefly referred to as: SysStatus MEM).

The SysStatus MEM is generally placed on the main control board of a device or the trustworthiness management module of the network management system. The SysStatus MEM is mainly configured to record a trustworthiness status of each FRU in the system, and store some public information used for checking. Through the information stored in the SysStatus MEM, the trustworthiness status of each FRU in the whole system may be seen conveniently, and a situation of trustworthiness operation performed by the system may be learnt.

The information stored in the SysStatus MEM may at least include one or any combination of the following information:
1) the electronic identifier used to uniquely identify each FRU, and presence status information and trustworthiness checking information of each FRU;
2) the trustworthiness alarm information;
3) the trustworthiness log; and
4) optionally, information, such as the encryption algorithm, a key used for encryption, or the public key used for asymmetric encryption and so on, may also be included.

Generally, multiple authority statuses are divided for the SysStatus MEM, for example, a status area indicates running status information of the system, and is used in program update control; and some fixed information is placed in an information area, which requires stricter authority control.

A method for checking sending of a sender and a method for checking receiving of a receiver are introduced in the following.

In the embodiment of the present invention, the method for checking sending of the sender may include:
1: obtaining, by the sender, write permission of the Security MEM; and
2: extracting, by the sender, the key identifier information of the FRU, encrypting the key identifier information by using the agreed encryption manner, and then storing the information in the Security MEM.

Strict identity authentication or a specific tool is needed in order to perform the write operation to the Security MEM, and an event that the write operation is performed on the Security MEM and the identity authentication information need to be recorded in the security log.

In the embodiment of the present invention, the method for checking receiving of the receiver may include:
1: obtaining, by the receiver, the encrypted key identifier information saved in the Security MEM of the FRU, decrypting the encrypted key identifier information, and comparing it with the key identifier information directly obtained from the FRU; and
2: if the key identifier information obtained after the encrypted key identifier information saved in the Security MEM is decrypted is the same as the key identifier information directly obtained from the FRU, determining that the FRU is trustworthy.

Dynamic checking of the FRU is introduced in the following.

In the embodiment of the present invention, the dynamic checking of the FRU includes the following cases.
1: In the start process of the FRU, the trustworthiness checking is performed on the FRU.
   Specifically, after the FRU is inserted into the system, the main control board of the device or a device management system of the network management system may obtain the key identifier information saved in the Security MEM of the FRU, and then determine the trustworthiness of the FRU according to the key identifier information saved in the Security MEM and the key identifier information directly obtained from the FRU. Specifically, the trustworthiness checking may be that all or part of the key identifier information of the FRU is checked, and during checking, the key identifier information that needs to be checked is checked in turn. If a check error is found in any information of the key identifier information, an alarm is generated, and the checking process is stopped.
   Finally, the system determines, according to the trustworthiness of the FRU, whether the FRU is allowed to be registered in the system. Specifically, if it is determined that the FRU is trustworthy, the FRU is allowed to be registered, the electronic identifier used to uniquely identify the FRU is saved in the SysStatus MEM, and after the FRU is successfully registered, the status of the FRU in the SysStatus MEM is updated to the online status. If it is determined that the FRU is untrustworthy, the FRU is not allowed to be registered, an alarm is generated, and the event that the FRU is untrustworthy is recorded in the log.
2: In the running process of the FRU, the trustworthiness checking is performed on the FRU.
   Specifically, in the running process of the FRU, the key identifier information saved in the Security MEM of the FRU may be obtained regularly or periodically, or the key identifier information that is saved in the Security MEM of the FRU and is reported by the FRU after the FRU is triggered by a command may be received; and then, the trustworthiness of the FRU is determined according to the key identifier information saved in the Security MEM and the key identifier information directly obtained from the FRU. Likewise, the trustworthiness checking may be that all or part of the key identifier information of the FRU is checked, and during checking, the key identifier information that needs to be checked is checked in turn. If a check error is found in any information of the key identifier information, an alarm is generated, and the checking process is stopped.
   In the running process of the FRU, if it is determined that the FRU is trustworthy, the result of the trustworthiness checking is output. If it is determined that the FRU is untrustworthy, the FRU is brought offline, the status of the FRU in the SysStatus MEM is updated to the offline status, the alarm information is output, and the event that the FRU is untrustworthy is recorded in the log.
3: The FRU supports hot plugging. In the running process of the system, an FRU is inserted, key identifier information saved in a Security MEM of the newly inserted FRU may be obtained in the same way, and the trustworthiness of the FRU is determined according to the key identifier information saved in the Security MEM and key identifier information directly obtained from the newly inserted FRU. Likewise, the trustworthiness checking may be that all or part of the key identifier information of the newly inserted FRU is checked, and during checking, the key identifier information that needs to be checked is checked in turn. If a check error is found in any information of the key identifier information, an alarm is generated, and the checking process is stopped.

If it is determined that the newly inserted FRU is trustworthy, the newly inserted FRU is allowed to be registered, an identifier of the FRU corresponding to a slot number of the newly inserted FRU in the SysStatus MEM is updated to an electronic identifier used to uniquely identify the newly inserted FRU, and after the newly inserted FRU is successfully registered, the status of the newly inserted FRU in the SysStatus MEM is updated to the online status. If it is determined that the newly inserted FRU is untrustworthy, the newly inserted FRU is not allowed to be registered, an alarm is generated, and the event that the newly inserted FRU is untrustworthy is recorded in the log.

In the embodiment of the present invention, after the FRU is unplugged, the status of the FRU in the SysStatus MEM is updated to unplugged.

Particularly, the trustworthiness checking may be performed on a replaced FRU in the same manner after the FRU is replaced due to service adjustment. Specifically, key identifier information saved in the Security MEM of the replaced FRU may be obtained, and trustworthiness of the replaced FRU is determined according to the key identifier information saved in the Security MEM and key identifier information directly obtained from the replaced FRU. Likewise, the trustworthiness checking may be that all or part of the key identifier information of the replaced FRU is checked, and during checking, the key identifier information that needs to be checked is checked in turn. If a check error is found in any information of the key identifier information, an alarm is generated, and the checking process is stopped.

If it is determined that the replaced FRU is trustworthy, the replaced FRU is allowed to be registered, an identifier of the FRU corresponding to a slot number of the replaced FRU in the SysStatus MEM is updated to an electronic identifier used to uniquely identify the replaced FRU, and after the replaced FRU is successfully registered, a status of the replaced FRU in the SysStatus MEM is updated to the online status. If it is determined that the replaced FRU is untrustworthy, the replaced FRU is not allowed to be registered, an alarm is generated, and an event that the replaced FRU is untrustworthy is recorded in the log.

In the description of the dynamic checking process of the FRU, reference may be made to the description in the embodiment shown in FIG 1 of the present invention for the determining the trustworthiness of the FRU according to the key identifier information saved in the Security MEM and the key identifier information directly obtained from the FRU, which is not repeatedly described here.

With the method for checking the field replaceable unit provided in the embodiment of the present invention, the trustworthiness checking of the field replaceable unit may be implemented, the implementation is simple, and the cost is low.

Persons of ordinary skill in the art may understand that all or part of the steps of the method embodiment may be implemented by a program instructing relevant hardware. The program may be stored in a computer readable storage medium. When the program is executed, the steps of the method embodiment are performed. The storage medium includes various media that is may store program codes, such as a ROM, a RAM, a magnetic disk, a compact disk, and so on.

FIG. 2 is a schematic structural diagram of an embodiment of an apparatus for checking a field replaceable unit according to the present invention. The apparatus for checking the field replaceable unit in this embodiment may implement the process of the embodiment shown in FIG. 1 of the present invention. As shown in FIG. 2, the apparatus for checking the field replaceable unit may include: an obtaining module 21 and a determining module 22, where
the obtaining module 21 is configured to obtain key identifier information saved in a security memory module; and
the determining module 22 is configured to determine trustworthiness of the field replaceable unit according to the key identifier information that is saved in the security memory module and is obtained by the obtaining module 21 and key identifier information that is directly obtained from the field replaceable unit.

In this embodiment, the apparatus for checking the field replaceable unit may be configured in a communication device including the field replaceable unit, where the communication device may be a stored program control telephone switching system, a data communication device, a wireless communication device or an optical transmission device and so on, and may also be a server type device, including a minicomputer, a server or a computer and so on.

In the foregoing embodiment, after the obtaining module 21 obtains the key identifier information saved in the security memory module of the field replaceable unit, the determining module 22 may determine the trustworthiness of the field replaceable unit according to the key identifier information saved in the security memory module and the key identifier information directly obtained from the field replaceable unit, thereby implementing trustworthiness checking of the field replaceable unit, the implementation is simple, and the cost is low.

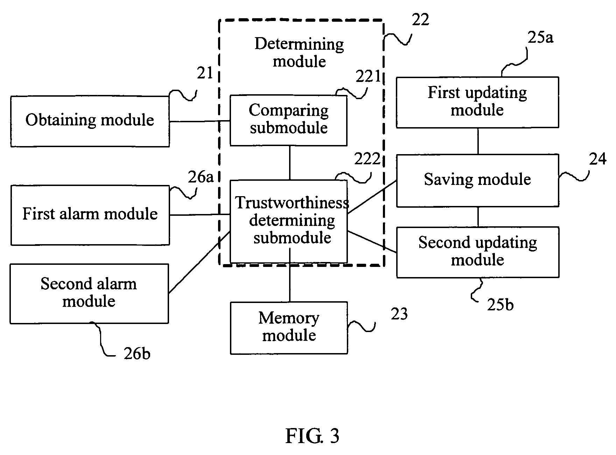

FIG 3 is a schematic structural diagram of another embodiment of an apparatus for checking a field replaceable unit according to the present invention. Compared with the apparatus for checking the field replaceable unit shown in FIG. 2, a difference lies in that, the determining module 22 may include: a comparing submodule 221 and a trustworthiness determining submodule 222, where
the comparing submodule 221 is configured to compare the key identifier information saved in the security memory module with the key identifier information directly obtained from the field replaceable unit; and
the trustworthiness determining submodule 222 is configured to, when the comparing submodule 221 determines that the key identifier information saved in the security memory module is consistent with the key identifier information directly obtained from the field replaceable unit, determine that the field replaceable unit is trustworthy, and when the comparing submodule 221 determines that the key identifier information saved in the security memory module is inconsistent with the key identifier information directly obtained from the field replaceable unit, determine that the field replaceable unit is untrustworthy.

Specifically, the comparing submodule 221 may decrypt the encrypted key identifier information saved in the security memory module, compare the decrypted key identifier information with the key identifier information directly obtained from the field replaceable unit; or, encrypt the key identifier information directly obtained from the field replaceable unit, and compare the key identifier information, which is directly obtained from the field replaceable unit and is encrypted, with the encrypted key identifier information saved in the security memory module, where an encryption algorithm adopted to encrypt the key identifier information directly obtained from the field replaceable unit is the same as an encryption algorithm adopted in the encrypted key identifier information saved in the security memory module.

Optionally, the apparatus for checking the field replaceable unit may further include:
a memory module 23, configured to store the trustworthiness of the field replaceable unit in a system status memory module.

Specifically, the obtaining module 21 may, after the field replaceable unit is received and before the field replaceable unit is used for the first time, obtain the key identifier information saved in the security memory module of the field replaceable unit; or, in a start process of the field replaceable unit, obtain the key identifier information saved in the security memory module of the field replaceable unit; or, after a field replaceable unit is newly inserted, obtain key identifier information saved in a security memory module of the newly inserted field replaceable unit; or, in a running process of the field replaceable unit, regularly or periodically obtain the key identifier information saved in the security memory module of the field replaceable unit; or, in the running process of the field replaceable unit, receive the key identifier information that is saved in the security memory module of the field replaceable unit and is reported by the field replaceable unit after the field replaceable unit is triggered by a command.

Optionally, the apparatus for checking the field replaceable unit may further include: a saving module 24, a first updating module 25a and a first alarm module 26a, where
in an implementation manner of this embodiment, the saving module 24 is configured to, in the start process of the field replaceable unit, if the determining module 22 determines that the field replaceable unit is trustworthy, allow the field replaceable unit to be registered, and save an electronic identifier used to uniquely identify the field replaceable unit in the system status memory module;
the first updating module 25a is configured to, after the field replaceable unit is successfully registered, update a status of the field replaceable unit in the system status memory module to an online status; and
the first alarm module 26a is configured to, in the start process of the field replaceable unit, if the determining module 22 determines that the field replaceable unit is untrustworthy, generate an alarm, and record an event that the field replaceable unit is untrustworthy in a log.

In another implementation manner of this embodiment, the apparatus for checking the field replaceable unit may further include: a second updating module 25b and a second alarm module 26b. The second updating module 25b is configured to, in the running process of the field replaceable unit, if the determining module 22 determines that the field replaceable unit is untrustworthy, bring the field replaceable unit offline, and update the status of the field replaceable unit in the system status memory module to an offline status.

The second alarm module 26b is configured to, in the running process of the field replaceable unit, if the determining module 22 determines that the field replaceable unit is untrustworthy, generate an alarm, and record an event that the field replaceable unit is untrustworthy in a log.

Optionally, the first alarm module 26a and the second alarm module 26b may be implemented in a same module or device, and the first updating module 25a and the second updating module 25b may also be implemented in a same module or device.

The foregoing apparatus for checking the field replaceable unit may implement trustworthiness checking of the field replaceable unit, the implementation is simple, and the cost is low.

An embodiment of the present invention further provides a communication device. The communication device includes at least one field replaceable unit and at least one apparatus for checking the field replaceable unit. The apparatus for checking the field replaceable unit may be implemented through the apparatus for checking the field replaceable unit shown in FIG. 2 or FIG. 3 of the present invention. The communication device may be a stored program control telephone switching system, a data communication device, a wireless communication device or an optical transmission device and so on, and may also be a server type device, including a minicomputer, a server or a computer and so on.

In the embodiment of the present invention, one device may include multiple field replaceable units.

Persons skilled in the art may understand that the accompanying drawings are merely schematic diagrams of an exemplary embodiment, and modules or processes in the accompanying drawings are not necessarily required in implementing the present invention.

Persons skilled in the art may understand that the modules in the apparatus provided in the embodiments may be distributed in the apparatus according to the description of the embodiments, or may be placed in one or multiple apparatuses, which are different from those described in the embodiments, after a corresponding change. The modules in the embodiments may be combined into one module, or split into multiple submodules.

Finally, it should be noted that the foregoing embodiments are merely used for describing the technical solutions of the present invention other than limiting the present invention. Although the present invention is described in detail with reference to the foregoing embodiments, persons of ordinary skill in the art should understood that they may still make modifications to the technical solutions described in the foregoing embodiments, or make equivalent replacements to part of the technical features, and such modifications or replacements do not make the nature of corresponding technical solutions depart from the scope of the technical solutions of the embodiments of the present invention.

## Claims

1. A method for checking a field replaceable unit, comprising:
obtaining (101) first key identifier information saved in a security memory module; and
determining (102) trustworthiness of the field replaceable unit according to the first key identifier information saved in the security memory module and second key identifier information obtained from the field replaceable unit;
wherein the determining (102) the trustworthiness of the field replaceable unit according to the first key identifier information saved in the security memory module and the second key identifier information obtained from the field replaceable unit comprises:
comparing the first key identifier information saved in the security memory module with the second key identifier information obtained from the field replaceable unit;
if the first key identifier information saved in the security memory module is consistent with the second key identifier information obtained from the field replaceable unit, determining that the field replaceable unit is trustworthy; and
if the first key identifier information saved in the security memory module is inconsistent with the second key identifier information obtained from the field replaceable unit, determining that the field replaceable unit is untrustworthy;
**characterized in that**,
the first key identifier information saved in the security memory module comprises an encrypted digest, the digest being a digest of an identifier and topology of a key chip in the field replaceable unit, wherein the topology of the key chip is a connection information of a Joint Test Action Group, JTAG, scan chain.

2. The method according to claim 1, wherein the comparing the first key identifier information saved in the security memory module with the second key identifier information obtained from the field replaceable unit comprises:
decrypting the encrypted first key identifier information saved in the security memory module, and comparing the decrypted first key identifier information with the second key identifier information obtained from the field replaceable unit; or
encrypting the second key identifier information obtained from the field replaceable unit, comparing the encrypted second key identifier information with the encrypted first key identifier information saved in the security memory module, wherein an encryption algorithm adopted to encrypt the second key identifier information obtained from the field replaceable unit is the same as an encryption algorithm adopted in the encrypted first key identifier information saved in the security memory module.

3. The method according to claim 2, wherein the encrypted first key identifier information saved in the security memory module further comprises one or any combination of the following: a ciphertext of an electronic identifier used to uniquely identify the field replaceable unit, a digest ciphertext of a read only memory program area in the field replaceable unit, and a digest ciphertext of a system software program area or another software program area except the system software program area in the field replaceable unit.

4. The method according to any one of claims 1 to 3, wherein after the determining (102) the trustworthiness of the field replaceable unit according to the first key identifier information saved in the security memory module and the second key identifier information obtained from the field replaceable unit, the method further comprises:
storing the trustworthiness of the field replaceable unit in a system status memory module.

5. The method according to any one of claims 1 to 3, wherein the obtaining (101) the first key identifier information saved in the security memory module comprises:
after the field replaceable unit is received, and before the field replaceable unit is used for the first time, obtaining the first key identifier information saved in the security memory module of the field replaceable unit; or
in a start process of the field replaceable unit, obtaining the first key identifier information saved in the security memory module of the field replaceable unit; or
in a running process of the field replaceable unit, regularly or periodically obtaining the first key identifier information saved in the security memory module of the field replaceable unit; or
in the running process of the field replaceable unit, receiving the first key identifier information that is saved in the security memory module of the field replaceable unit and is reported by the field replaceable unit after the field replaceable unit is triggered by a command.

6. The method according to claim 5, further comprising:
in the start process of the field replaceable unit, if it is determined that the field replaceable unit is trustworthy, allowing the field replaceable unit to be registered, saving the electronic identifier used to uniquely identify the field replaceable unit in a system status memory module, and after the field replaceable unit is successfully registered, updating a status of the field replaceable unit in the system status memory module to an online status; and
if it is determined that the field replaceable unit is untrustworthy, generating an alarm, and recording an event that the field replaceable unit is untrustworthy in a log.

7. The method according to claim 5, further comprising:
in the running process of the field replaceable unit, if it is determined that the field replaceable unit is untrustworthy, bringing the field replaceable unit offline, updating a status of the field replaceable unit in a system status memory module to an offline status, outputting alarm information, and recording an event that the field replaceable unit is untrustworthy in a log.

8. An apparatus for checking a field replaceable unit, comprising:
an obtaining module (21), configured to obtain first key identifier information saved in a security memory module; and
a determining module (22), configured to determine trustworthiness of the field replaceable unit according to the first key identifier information that is saved in the security memory module and is obtained by the obtaining module and second key identifier information obtained from the field replaceable unit;
wherein the determining module (22) comprises:
a comparing submodule (221), configured to compare the first key identifier information saved in the security memory module with the second key identifier information obtained from the field replaceable unit; and
a trustworthiness determining submodule (222), configured to, when the comparing submodule (221) determines that the first key identifier information saved in the security memory module is consistent with the second key identifier information obtained from the field replaceable unit, determine that the field replaceable unit is trustworthy, and when the comparing submodule (221) determines that the first key identifier information saved in the security memory module is inconsistent with the second key identifier information obtained from the field replaceable unit, determine that the field replaceable unit is untrustworthy;
**characterized in that**,
the first key identifier information saved in the security memory module comprises an encrypted digest, the digest being a digest of an identifier and topology of a key chip in the field replaceable unit, wherein the topology of the key chip is a connection information of a Joint Test Action Group, JTAG, scan chain.

9. The apparatus according to claim 8, wherein
the comparing submodule (221) is specifically configured to:
decrypt the encrypted first key identifier information saved in the security memory module, and compare the decrypted first key identifier information with the second key identifier information obtained from the field replaceable unit; or
encrypt the second key identifier information obtained from the field replaceable unit, and compare the encrypted second key identifier information, which is obtained from the field replaceable unit and is encrypted, with encrypted first key identifier information saved in the security memory module, wherein
an encryption algorithm adopted to encrypt second the key identifier information obtained from the field replaceable unit is the same as an encryption algorithm adopted in the encrypted first key identifier information saved in the security memory module.

10. The apparatus according to any one of claims8 to 9, further comprising,
a memory module(23), configured to store the trustworthiness of the field replaceable unit in a system status memory module.

11. The apparatus according to any one of claims 8 to 9, wherein
the obtaining module (21) is specifically configured to:
after the field replaceable unit is received, and before the field replaceable unit is used for the first time, obtain the first key identifier information saved in the security memory module of the field replaceable unit; or
in a start process of the field replaceable unit, obtain the first key identifier information saved in the security memory module of the field replaceable unit; or
after a field replaceable unit is newly inserted, obtain the first key identifier information saved in a security memory module of the newly inserted field replaceable unit; or
in a running process of the field replaceable unit, obtain the first key identifier information saved in the security memory module of the field replaceable unit regularly or periodically; or
in the running process of the field replaceable unit, receive the first key identifier information that is saved in the security memory module of the field replaceable unit and is reported by the field replaceable unit after the field replaceable unit is triggered by a command.

12. The apparatus according to claim 11, further comprising: a saving module (24), a first updating module (25a) and a first alarm module (26a), wherein
the saving module (24) is configured to, in the start process of the field replaceable unit, if the determining module (22) determines that the field replaceable unit is trustworthy, allow the field replaceable unit to be registered, and save an electronic identifier used to uniquely identify the field replaceable unit in a system status memory module;
the first updating module (25a) is configured to, after the field replaceable unit is successfully registered, update a status of the field replaceable unit in the system status memory module to an online status; and
the first alarm module (26a) is configured to, in the start process of the field replaceable unit, if the determining module determines that the field replaceable unit is untrustworthy, generate an alarm, and record an event that the field replaceable unit is untrustworthy in a log.

13. The apparatus according to claim 11, further comprising: a second updating module (25b) and a second alarm module (26b), wherein
the second updating module (25b) is configured to, in the running process of the field replaceable unit, if the determining module (22) determines that the field replaceable unit is untrustworthy, bring the field replaceable unit offline, and update a status of the field replaceable unit in a system status memory module to an offline status; and
the second alarm module (26b) is configured to, in the running process of the field replaceable unit, if the determining module determines that the field replaceable unit is untrustworthy, generate an alarm, and record an event that the field replaceable unit is untrustworthy in a log.

14. A communication device, comprising: at least one field replaceable unit and at least one apparatus for checking the field replaceable unit according to any one of claims 8 to 13.

## Patentansprüche

1. Verfahren zum Überprüfen einer vor Ort austauschbaren Einheit, umfassend:
Erhalten (101) von ersten Schlüsselkennungsinformationen, die in einem Sicherheitsspeichermodul gespeichert sind; und
Ermitteln (102) der Zuverlässigkeit der vor Ort austauschbaren Einheit gemäß den ersten Schlüsselkennungsinformationen, die in dem Sicherheitspeichermodul gespeichert sind, und zweiten Schlüsselkennungsinformationen, die von der vor Ort austauschbaren Einheit erhalten werden;
wobei das Ermitteln (102) der Zuverlässigkeit der vor Ort austauschbaren Einheit gemäß den ersten Schlüsselkennungsinformationen, die in dem Sicherheitspeichermodul gespeichert sind, und den zweiten Schlüsselkennungsinformationen, die von der vor Ort austauschbaren Einheit erhalten werden, Folgendes umfasst:
Vergleichen der ersten Schlüsselkennungsinformationen, die in dem Sicherheitsspeichermodul gespeichert sind, mit den zweiten Schlüsselkennungsinformationen, die von der vor Ort austauschbaren Einheit erhalten werden;
falls die ersten Schlüsselkennungsinformationen, die in dem Sicherheitsspeichermodul gespeichert sind, mit den zweiten Schlüsselkennungsinformationen, die von der vor Ort austauschbaren Einheit erhalten werden, übereinstimmen, Ermitteln, dass die vor Ort austauschbare Einheit zuverlässig ist; und
falls die ersten Schlüsselkennungsinformationen, die in dem Sicherheitsspeichermodul gespeichert sind, nicht mit den zweiten Schlüsselkennungsinformationen, die von der vor Ort austauschbaren Einheit erhalten werden, übereinstimmen, Ermitteln, dass die vor Ort austauschbare Einheit nicht zuverlässig ist;
**dadurch gekennzeichnet, dass**
die ersten Schlüsselkennungsinformationen, die in dem Sicherheitsspeichermodul gespeichert sind, einen verschlüsselten Digest aufweisen, wobei der Digest ein Digest einer Kennung und Topologie eines Schlüsselchips in der vor Ort austauschbaren Einheit ist, wobei die Topologie des Schlüsselchips eine Verbindungsinformation einer "Joint Test Action Group" (JTAG)-Abtastkette ist.

2. Verfahren nach Anspruch 1, wobei das Vergleichen der ersten Schlüsselkennungsinformationen, die in dem Sicherheitsspeichermodul gespeichert sind, mit den zweiten Schlüsselkennungsinformationen, die von der vor Ort austauschbaren Einheit erhalten werden, Folgendes umfasst:
Entschlüsseln der verschlüsselten ersten Schlüsselkennungsinformationen, die in dem Sicherheitsspeichermodul gespeichert sind, und Vergleichen der entschlüsselten ersten Schlüsselkennungsinformationen mit den zweiten Schlüsselkennungsinformationen, die von der vor Ort austauschbaren Einheit erhalten werden; oder
Verschlüsseln der zweiten Schlüsselkennungsinformationen, die von der vor Ort austauschbaren Einheit erhalten werden, Vergleichen der verschlüsselten zweiten Schlüsselkennungsinformationen mit den verschlüsselten ersten Schlüsselkennungsinformationen, die in dem Sicherheitsspeichermodul gespeichert sind, wobei ein Verschlüsselungsalgorithmus zur Verschlüsselung der zweiten Schlüsselkennungsinformationen, die von der vor Ort austauschbaren Einheit erhalten werden, derselbe ist wie ein Verschlüsselungsalgorithmus in den verschlüsselten ersten Schlüsselkennungsinformationen, die in dem Sicherheitsspeichermodul gespeichert sind.

3. Verfahren nach Anspruch 2, wobei die verschlüsselten ersten Schlüsselkennungsinformationen, die in dem Sicherheitspeichermodul gespeichert sind, ferner eines oder eine Kombination der Folgenden umfassen: einen Chiffretext einer elektronischen Kennung zur eindeutigen Identifizierung der vor Ort austauschbaren Einheit, einen Digest-Chiffretext eines Programmbereichs eines Nur-Lese-Speichers in der vor Ort austauschbaren Einheit, und einen Digest-Chiffretext eines Programmbereichs einer Systemsoftware oder eines anderen Software-Programmbereichs, mit Ausnahme des Programmbereichs einer Systemsoftware in der vor Ort austauschbaren Einheit.

4. Verfahren nach einem der Ansprüche 1 bis 3, wobei nach dem Ermitteln (102) der Zuverlässigkeit der vor Ort austauschbaren Einheit gemäß den ersten Schlüsselkennungsinformationen, die in dem Sicherheitspeichermodul gespeichert sind, und den zweiten Schlüsselkennungsinformationen, die von der vor Ort austauschbaren Einheit erhalten werden, das Verfahren ferner umfasst:
Speichern der Zuverlässigkeit der vor Ort austauschbaren Einheit einem Systemstatus-Speichermodul.

5. Verfahren nach einem der Ansprüche 1 bis 3, wobei das Empfangen (101) der ersten Schlüsselkennungsinformationen, die in dem Sicherheitsspeichermodul gespeichert sind, Folgendes umfasst:
nachdem die vor Ort austauschbare Einheit erhalten wird und bevor die vor Ort austauschbare Einheit zum ersten Mal verwendet wird, Empfangen der ersten Schlüsselkennungsinformationen, die in dem Sicherheitsspeichermodul der vor Ort austauschbaren Einheit gespeichert sind; oder
in einem Startprozess der vor Ort austauschbaren Einheit Erhalten der ersten Schlüsselkennungsinformationen, die in dem Sicherheitsspeichermodul der vor Ort austauschbaren Einheit gespeichert sind; oder
in einem laufenden Prozess der vor Ort austauschbaren Einheit regelmäßiges oder periodisches Erhalten der ersten Schlüsselkennungsinformationen, die in dem Sicherheitsspeichermodul der vor Ort austauschbaren Einheit gespeichert sind; oder in dem laufenden Prozess der vor Ort austauschbaren Einheit Empfangen der ersten Schlüsselkennungsinformationen, die in dem Sicherheitsspeichermodul der vor Ort austauschbaren Einheit gespeichert sind und die von der vor Ort austauschbaren Einheit berichtet werden, nachdem die vor Ort austauschbare Einheit durch einen Befehl ausgelöst wird.

6. Verfahren nach Anspruch 5, ferner umfassend:
im Startprozess der vor Ort austauschbaren Einheit, falls die Zuverlässigkeit der vor Ort austauschbaren Einheit ermittelt wird, Ermöglichen der Registrierung der vor Ort austauschbaren Einheit, Speichern der elektronischen Kennung zur eindeutigen Identifizierung der vor Ort austauschbaren Einheit in einem Systemstatus-Speichermodul, und nachdem die vor Ort austauschbare Einheit erfolgreich registriert wurde, Aktualisieren eines Status der vor Ort austauschbaren Einheit in dem Systemstatus-Speichermodul auf einen Online-Status; und
falls die Unzuverlässigkeit der vor Ort austauschbaren Einheit ermittelt wird, Erzeugen eines Alarms und Aufzeichnen eines Ereignisses in einem Protokoll, dass die vor Ort austauschbare Einheit unzuverlässig ist.

7. Verfahren nach Anspruch 5, ferner umfassend:
im laufenden Prozess der vor Ort austauschbaren Einheit, falls ermittelt wird, dass die vor Ort austauschbare Einheit unzuverlässig ist, Offline-Setzen der vor Ort austauschbaren Einheit, Aktualisieren eines Status der vor Ort austauschbaren Einheit in einem Systemstatus-Speichermodul auf einen Offline-Status, Ausgeben von Alarminformationen und Aufzeichnen eines Ereignisses in einem Protokoll, dass die vor Ort austauschbare Einheit unzuverlässig ist.

8. Gerät zum Überprüfen einer vor Ort austauschbaren Einheit, umfassend:
ein Empfangsmodul (21), das ausgestaltet ist, um erste Schlüsselkennungsinformationen, die in einem Sicherheitsspeichermodul gespeichert sind, zu erhalten; und
ein Ermittlungsmodul (22), das ausgestaltet ist, um die Zuverlässigkeit der vor Ort austauschbaren Einheit gemäß den ersten Schlüsselkennungsinformationen, die in dem Sicherheitspeichermodul gespeichert sind und die von dem Empfangsmodul erhalten werden, und zweiten Schlüsselkennungsinformationen, die von der vor Ort austauschbaren Einheit erhalten werden, zu ermitteln;
wobei das Ermittlungsmodul (22) umfasst:
ein Vergleichs-Untermodul (221), das ausgestaltet ist, um die ersten Schlüsselkennungsinformationen, die in dem Sicherheitsspeichermodul gespeichert sind, mit den zweiten Schlüsselkennungsinformationen, die von der vor Ort austauschbaren Einheit erhalten werden, zu vergleichen; und
ein Untermodul (222) zur Ermittlung der Zuverlässigkeit, das ausgestaltet ist, um zu ermitteln, dass die vor Ort austauschbare Einheit zuverlässig ist, wenn das Vergleichsuntermodul (221) ermittelt, dass die ersten Schlüsselkennungsinformationen, die in dem Sicherheitsspeichermodul gespeichert sind, mit den zweiten Schlüsselkennungsinformationen, die von der vor Ort austauschbaren Einheit erhalten werden, übereinstimmen, und wenn das Vergleichsuntermodul (221) ermittelt, dass die ersten Schlüsselkennungsinformationen, die in dem Sicherheitsspeichermodul gespeichert sind, nicht mit den zweiten Schlüsselkennungsinformationen, die von der vor Ort austauschbaren Einheit erhalten werden, übereinstimmen, ermitteln, dass die vor Ort austauschbare Einheit unzuverlässig ist;
**dadurch gekennzeichnet, dass**
die ersten Schlüsselkennungsinformationen, die in dem Sicherheitsspeichermodul gespeichert sind, einen verschlüsselten Digest aufweisen, wobei der Digest ein Digest einer Kennung und Topologie eines Schlüsselchips in der vor Ort austauschbaren Einheit ist, wobei die Topologie des Schlüsselchips eine Verbindungsinformation einer "Joint Test Action Group" (JTAG)-Abtastkette ist.

9. Gerät nach Anspruch 8, wobei
das Vergleichsuntermodul (221) insbesondere ausgestaltet ist, um:
die verschlüsselten ersten Schlüsselkennungsinformationen, die in dem Sicherheitsspeichermodul gespeichert sind, zu entschlüsseln und die entschlüsselten ersten Schlüsselkennungsinformationen mit den zweiten Schlüsselkennungsinformationen, die von der vor Ort austauschbaren Einheit erhalten werden, zu vergleichen; oder
die zweiten Schlüsselkennungsinformationen, die von der vor Ort austauschbaren Einheit erhalten werden, zu verschlüsseln und die verschlüsselten zweiten Schlüsselkennungsinformationen, die von der vor Ort austauschbaren Einheit erhalten werden, mit verschlüsselten ersten Schlüsselkennungsinformationen, die in dem Sicherheitsspeichermodul gespeichert sind, zu vergleichen, wobei ein Verschlüsselungsalgorithmus zur Verschlüsselung der zweiten Schlüsselkennungsinformationen, die von der vor Ort austauschbaren Einheit erhalten werden, derselbe ist wie ein Verschlüsselungsalgorithmus in den verschlüsselten ersten Schlüsselkennungsinformationen, die in dem Sicherheitsspeichermodul gespeichert sind.

10. Gerät nach einem der Ansprüche 8 bis 9, ferner umfassend:
ein Speichermodul (23), das ausgestaltet ist, um die Zuverlässigkeit der vor Ort austauschbaren Einheit in einem Systemstatus-Speichermodul zu speichern.

11. Gerät nach einem der Ansprüche 8 bis 9, wobei
das Empfangsmodul (21) insbesondere ausgestaltet ist, um:
nachdem die vor Ort austauschbare Einheit erhalten wurde und bevor die vor Ort austauschbare Einheit zum ersten Mal verwendet wird, die ersten Schlüsselkennungsinformationen, die in dem Sicherheitsspeichermodul der vor Ort austauschbaren Einheit gespeichert sind, zu erhalten; oder
in einem Startprozess der vor Ort austauschbaren Einheit die ersten Schlüsselkennungsinformationen, die in dem Sicherheitsspeichermodul der vor Ort austauschbaren Einheit gespeichert sind, zu erhalten; oder
nachdem eine vor Ort austauschbare Einheit neu eingesetzt wurde, die ersten Schlüsselkennungsinformationen, die in einem Sicherheitsspeichermodul der neu eingesetzten vor Ort austauschbaren Einheit gespeichert sind, zu erhalten; oder
in einem laufenden Prozess der vor Ort austauschbaren Einheit die ersten Schlüsselkennungsinformationen, die in dem Sicherheitsspeichermodul der vor Ort austauschbaren Einheit gespeichert sind, regelmäßig oder periodisch zu erhalten; oder
in dem laufenden Prozess der vor Ort austauschbaren Einheit die ersten Schlüsselkennungsinformationen, die in dem Sicherheitsspeichermodul der vor Ort austauschbaren Einheit gespeichert sind und die von der vor Ort austauschbaren Einheit berichtet werden, nachdem die vor Ort austauschbare Einheit durch einen Befehl ausgelöst wird, zu empfangen.

12. Gerät nach Anspruch 11, ferner umfassend: ein Speichermodul (24), ein erstes Aktualisierungsmodul (25a) und ein erstes Alarmmodul (26a), wobei das Speichermodul (24) ausgestaltet ist, um im Startprozess der vor Ort austauschbaren Einheit, falls die Zuverlässigkeit der vor Ort austauschbaren Einheit von dem Ermittlungsmodul (22) ermittelt wird, die Registrierung der vor Ort austauschbaren Einheit zu ermöglichen und eine elektronische Kennung zur eindeutigen Identifizierung der vor Ort austauschbaren Einheit in einem Systemstatus-Speichermodul zu speichern;
das erste Aktualisierungsmodul (25a) ausgestaltet ist, einen Status der vor Ort austauschbaren Einheit in dem Systemstatus-Speichermodul auf einen Online-Status zu aktualisieren, nachdem die vor Ort austauschbare Einheit erfolgreich registriert wurde; und
das erste Alarmmodul (26a) ausgestaltet ist, um im Startprozess der vor Ort austauschbaren Einheit, falls die Unzuverlässigkeit der vor Ort austauschbaren Einheit von dem Ermittlungsmodul ermittelt wird, einen Alarm zu erzeugen, und ein Ereignis in einem Protokoll aufzuzeichnen, dass die vor Ort austauschbare Einheit unzuverlässig ist.

13. Gerät nach Anspruch 11, ferner umfassend: ein zweites Aktualisierungsmodul (25b) und ein zweites Alarmmodul (26b), wobei
das zweite Aktualisierungsmodul (25b) ausgestaltet ist, um im laufenden Prozess der vor Ort austauschbaren Einheit, falls die Unzuverlässigkeit der vor Ort austauschbaren Einheit von dem Ermittlungsmodul (22) ermittelt wird, die vor Ort austauschbare Einheit offline zu setzen, und einen Status der vor Ort austauschbaren Einheit in einem Systemstatus-Speichermodul auf einen Offline-Status zu aktualisieren; und
das zweite Alarmmodul (26b) ausgestaltet ist, um im laufenden Prozess der vor Ort austauschbaren Einheit, falls die Unzuverlässigkeit der vor Ort austauschbaren Einheit von dem Ermittlungsmodul ermittelt wird, einen Alarm zu erzeugen, und ein Ereignis in einem Protokoll aufzuzeichnen, dass die vor Ort austauschbare Einheit unzuverlässig ist.

14. Kommunikationsvorrichtung, umfassend: mindestens eine vor Ort austauschbare Einheit und mindestens ein Gerät zum Überprüfen der vor Ort austauschbaren Einheit nach einem der Ansprüche 8 bis 13.

## Revendications

1. Procédé de vérification d'une unité remplaçable sur le terrain, comprenant :
l'obtention (101) de premières informations d'identification clés sauvegardées dans un module de mémoire de sécurité ; et
la détermination (102) de la fiabilité de l'unité remplaçable sur le terrain en fonction des premières informations d'identification clés sauvegardées dans le module de mémoire de sécurité et de secondes informations d'identification clés obtenues depuis l'unité remplaçable sur le terrain ;
dans lequel la détermination (102) de la fiabilité de l'unité remplaçable sur le terrain en fonction des premières informations d'identification clés sauvegardées dans le module de mémoire de sécurité et des secondes informations d'identification clés obtenues depuis l'unité remplaçable sur le terrain comprend :
la comparaison des premières informations d'identification clés sauvegardées dans le module de mémoire de sécurité aux secondes informations d'identification clés obtenues depuis l'unité remplaçable sur le terrain ;
si les premières informations d'identification clés sauvegardées dans le module de mémoire de sécurité sont cohérentes avec les secondes informations d'identification clés obtenues depuis l'unité remplaçable sur le terrain, la détermination que l'unité de définition de plan de transmission est fiable ; et
si les premières informations d'identification clés sauvegardées dans le module de mémoire de sécurité ne sont pas cohérentes avec les secondes informations d'identification clés obtenues depuis l'unité remplaçable sur le terrain, la détermination que l'unité remplaçable sur le terrain n'est pas fiable ;
**caractérisé en ce que**
les premières informations d'identification clés sauvegardées dans le module de mémoire de sécurité comprennent un condensé crypté, le condensé étant un condensé d'un identifiant et d'une topologie d'une puce clé dans l'unité remplaçable sur le terrain, la topologie de la puce clé étant une information de connexion d'une chaîne de balayage JTAG (Joint Test Action Group).

2. Procédé selon la revendication 1, dans lequel la comparaison des premières informations d'identification clés sauvegardées dans le module de mémoire de sécurité aux secondes informations d'identification clés obtenues depuis l'unité remplaçable sur le terrain comprend :
le décryptage des premières informations d'identification clés cryptées sauvegardées dans le module de mémoire de sécurité, et la comparaison des premières informations d'identification clés décryptées aux secondes informations d'identification clés obtenues depuis l'unité remplaçable sur le terrain ; ou
le cryptage des secondes informations d'identification clés obtenues depuis l'unité remplaçable sur le terrain, la comparaison des secondes informations d'identification clés cryptées aux premières informations d'identification clés cryptées sauvegardées dans le module de mémoire de sécurité, dans lequel un algorithme de cryptage adopté pour crypter les secondes informations d'identification clés obtenues depuis l'unité remplaçable sur le terrain est identique à un algorithme de cryptage adopté dans les premières informations d'identification clés cryptées sauvegardées dans le module de mémoire de sécurité.

3. Procédé selon la revendication 2, dans lequel les premières informations d'identification clés sauvegardées dans le module de mémoire de sécurité comprennent en outre l'un des éléments suivants, ou une combinaison de ceux-ci : un cryptogramme d'un identifiant électronique utilisé pour identifier de manière unique l'unité remplaçable sur le terrain, un cryptogramme condensé d'une zone de programme de mémoire morte dans l'unité remplaçable sur le terrain, et un cryptogramme condensé d'une zone de programme de logiciel de système ou autre zone de programme logiciel sauf la zone de programme logiciel de système dans l'unité remplaçable sur le terrain.

4. Procédé selon l'une quelconque des revendications 1 à 3, comprenant en outre, après la détermination (102) de la fiabilité de l'unité remplaçable sur le terrain en fonction des premières informations d'identification clés sauvegardées dans le module de mémoire de sécurité et des secondes informations d'identification clés obtenues depuis l'unité remplaçable sur le terrain :
la mémorisation de la fiabilité de l'unité remplaçable sur le terrain dans un module de mémoire d'état de système.

5. Procédé selon l'une quelconque des revendications 1 à 3, dans lequel l'obtention (101) des premières informations d'identification clés sauvegardées dans un module de mémoire de sécurité comprend :
après la réception de l'unité remplaçable sur le terrain, et avant la première utilisation de l'unité remplaçable sur le terrain, l'obtention des premières informations d'identification clés sauvegardées dans le module de mémoire de sécurité de l'unité remplaçable sur le terrain ; ou
dans un processus de démarrage de l'unité remplaçable sur le terrain, l'obtention des premières informations d'identification clés sauvegardées dans le module de mémoire de sécurité de l'unité remplaçable sur le terrain ; ou
dans un processus d'exécution de l'unité remplaçable sur le terrain, l'obtention régulière ou périodique des premières informations d'identification clés sauvegardées dans le module de mémoire de sécurité de l'unité remplaçable sur le terrain ; ou
dans un processus d'exécution de l'unité remplaçable sur le terrain, la réception des premières informations d'identification clés qui sont sauvegardées dans un module de mémoire de sécurité de l'unité remplaçable sur le terrain et sont signalées par l'unité remplaçable sur le terrain après que l'unité remplaçable sur le terrain est déclenchée par une commande.

6. Procédé selon la revendication 5, comprenant en outre :
dans le processus de démarrage de l'unité remplaçable sur le terrain, s'il est déterminé que l'unité remplaçable sur le terrain est fiable, l'autorisation de l'enregistrement de l'unité remplaçable sur le terrain, la sauvegarde de l'identifiant électronique utilisé pour identifier de manière unique l'unité remplaçable sur le terrain dans un module de mémoire d'état de système, et après que l'unité remplaçable sur le terrain est correctement enregistrée, l'actualisation d'un état de l'unité remplaçable sur le terrain dans le module de mémoire d'état de système sur un état en ligne ; et
s'il est déterminé que l'unité remplaçable sur le terrain n'est pas fiable, la génération d'une alarme, et l'enregistrement d'un événement que l'unité remplaçable sur le terrain n'est pas fiable dans un journal.

7. Procédé selon la revendication 5, comprenant en outre :
dans le processus d'exécution de l'unité remplaçable sur le terrain, s'il est déterminé que l'unité remplaçable sur le terrain n'est pas fiable, la mise hors ligne de l'unité remplaçable sur le terrain, l'actualisation d'un état de l'unité remplaçable sur le terrain dans un module de mémoire d'état de système sur un état hors ligne, la production d'informations d'alarme, et l'enregistrement d'un événement que l'unité remplaçable sur le terrain n'est pas fiable dans un journal.

8. Appareil de vérification d'une unité remplaçable sur le terrain, comprenant :
un module d'obtention (21), configuré pour obtenir des premières informations d'identification clés sauvegardées dans un module de mémoire de sécurité ; et un module de détermination (22), configuré pour déterminer la fiabilité de l'unité remplaçable sur le terrain en fonction des premières informations d'identification clés sauvegardées dans le module de mémoire de sécurité et obtenues par le module d'obtention et de secondes informations d'identification clés obtenues depuis l'unité remplaçable sur le terrain ;
dans lequel le module de détermination (22) comprend :
un sous-module de comparaison (221), configuré pour comparer les premières informations d'identification clés sauvegardées dans le module de mémoire de sécurité aux secondes informations d'identification clés obtenues depuis l'unité remplaçable sur le terrain ; et
un sous-module de détermination de fiabilité (222), configuré pour, quand le sous-module de comparaison (221) détermine que les premières informations d'identification clés sauvegardées dans le module de mémoire de sécurité sont cohérentes avec les secondes informations d'identification clés obtenues depuis l'unité remplaçable sur le terrain, déterminer que l'unité remplaçable sur le terrain est fiable, et quand le sous-module de comparaison (221) détermine que les premières informations d'identification clés sauvegardées dans le module de mémoire de sécurité ne sont pas cohérentes avec les secondes informations d'identification clés obtenues depuis l'unité remplaçable sur le terrain, déterminer que l'unité remplaçable sur le terrain n'est pas fiable ;
**caractérisé en ce que**
les premières informations d'identification clés sauvegardées dans le module de mémoire de sécurité comprennent un condensé crypté, le condensé étant un condensé d'un identifiant et d'une topologie d'une puce clé dans l'unité remplaçable sur le terrain, la topologie de la puce clé étant une information de connexion d'une chaîne de balayage JTAG (Joint Test Action Group).

9. Appareil selon la revendication 8, dans lequel
le sous-module de comparaison (221) est configuré spécifiquement pour :
décrypter les premières informations d'identification clés cryptées sauvegardées dans le module de mémoire de sécurité et comparer les premières informations d'identification clés décryptées aux secondes informations d'identification clés obtenues depuis l'unité remplaçable sur le terrain ; ou
crypter les secondes informations d'identification clés obtenues depuis l'unité remplaçable sur le terrain, et comparer les secondes informations d'identification clés cryptées, qui sont obtenues depuis l'unité remplaçable sur le terrain et sont cryptées, aux premières informations d'identification clés cryptées sauvegardées dans le module de mémoire de sécurité, dans lequel
un algorithme de cryptage adopté pour crypter les secondes informations d'identification clés obtenues depuis l'unité remplaçable sur le terrain est identique à un algorithme de cryptage adopté dans les premières informations d'identification clés cryptées sauvegardées dans le module de mémoire de sécurité.

10. Appareil selon l'une quelconque des revendications 8 à 9, comprenant en outre,
un module de mémoire (23) configuré pour mémoriser la fiabilité de l'unité remplaçable sur le terrain dans un module de mémoire d'état de système.

11. Appareil selon l'une quelconque des revendications 8 à 9, dans lequel le module d'obtention (21) est spécifiquement configuré pour :
après la réception de l'unité remplaçable sur le terrain, et avant la première utilisation de l'unité remplaçable sur le terrain, obtenir les premières informations d'identification clés sauvegardées dans le module de mémoire de sécurité de l'unité remplaçable sur le terrain ; ou
dans un processus de démarrage de l'unité remplaçable sur le terrain, obtenir les premières informations d'identification clés sauvegardées dans le module de mémoire de sécurité de l'unité remplaçable sur le terrain ; ou
après l'insertion nouvelle d'une unité remplaçable sur le terrain, obtenir les premières informations d'identification clés sauvegardées dans le module de mémoire de sécurité de l'unité remplaçable sur le terrain nouvellement insérée ; ou
dans un processus d'exécution de l'unité remplaçable sur le terrain, obtenir régulièrement ou périodiquement les premières informations d'identification clés sauvegardées dans le module de mémoire de sécurité de l'unité remplaçable sur le terrain ; ou
dans le processus d'exécution de l'unité remplaçable sur le terrain, recevoir les premières informations d'identification clés qui sont sauvegardées dans le module de mémoire de sécurité de l'unité remplaçable sur le terrain et sont signalées par l'unité remplaçable sur le terrain après que l'unité remplaçable sur le terrain est déclenchée par une commande.

12. Appareil selon la revendication 11, comprenant en outre : un module de sauvegarde (24), un premier module d'actualisation (25a) et un premier module d'alarme (26a), dans lequel
le module de sauvegarde (24) est configuré pour, dans le processus de démarrage de l'unité remplaçable sur le terrain, si le module de détermination (22) détermine que l'unité remplaçable sur le terrain est fiable, autoriser l'enregistrement de l'unité remplaçable sur le terrain, et sauvegarder un identifiant électronique utilisé pour identifier de manière unique l'unité remplaçable sur le terrain dans un module de mémoire d'état de système ;
le premier module d'actualisation (25a) est configuré pour, après que l'unité remplaçable sur le terrain est correctement enregistrée, actualiser un état de l'unité remplaçable sur le terrain dans le module de mémoire d'état de système sur un état en ligne ; et
le premier module d'alarme (26a) est configuré pour, dans le processus de démarrage de l'unité remplaçable sur le terrain, si le module de détermination détermine que l'unité remplaçable sur le terrain n'est pas fiable, générer une alarme, et enregistrer un événement que l'unité remplaçable sur le terrain n'est pas fiable dans un journal.

13. Appareil selon la revendication 11, comprenant en outre : un second module d'actualisation (25b) et un second module d'alarme (26b), dans lequel le second module d'actualisation (25a) est configuré pour, dans le processus d'exécution de l'unité remplaçable sur le terrain, si le module de détermination (22) détermine que l'unité remplaçable sur le terrain n'est pas fiable, mettre hors ligne l'unité remplaçable sur le terrain, et actualiser un état de l'unité remplaçable sur le terrain dans un module de mémoire d'état de système sur un état hors ligne ; et
le second module d'alarme (26b) est configuré pour, dans le processus d'exécution de l'unité remplaçable sur le terrain, si le module de détermination détermine que l'unité remplaçable sur le terrain n'est pas fiable, générer une alarme et enregistrer un événement que l'unité remplaçable sur le terrain n'est pas fiable dans un journal.

14. Dispositif de communication, comprenant : au moins une unité remplaçable sur le terrain et au moins un appareil pour vérifier l'unité remplaçable sur le terrain selon l'une quelconque des revendications 8 à 13.
